Europäisches Patentamt

European Patent Office

Office européen des brevets

(19)

(11) EP 1 193 688 A2

(12) **EUROPÄISCHE PATENTANMELDUNG**

(43) Veröffentlichungstag:
**03.04.2002 Patentblatt 2002/14**

(51) Int Cl.7: **G10L 15/06**

(21) Anmeldenummer: **01122936.6**

(22) Anmeldetag: **25.09.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **27.09.2000 DE 10047723**

(71) Anmelder:
- **Philips Corporate Intellectual Property GmbH 52064 Aachen (DE)**
  Benannte Vertragsstaaten:
  **DE**
- **Koninklijke Philips Electronics N.V. 5621 BA Eindhoven (NL)**
  Benannte Vertragsstaaten:
  **FR GB**

(72) Erfinder: **Botterweck, Henrik, Dr.
Habsburgerallee 11, 52064 Aachen (DE)**

(74) Vertreter: **Volmer, Georg, Dipl.-Ing. et al
Philips Corporate Intellectual Property GmbH,
Habsburgerallee 11
52064 Aachen (DE)**

(54) **Verfahren zur Ermittlung eines Eigenraums zur Darstellung einer Mehrzahl von Trainingssprechern**

(57) Beschrieben wird ein Verfahren zur Ermittlung eines Eigenraums zur Darstellung einer Mehrzahl von Trainingssprechern bei dem zunächst sprecherabhängige Modell-Sets für die einzelnen Trainingssprecher unter Verwendung von Trainingssprachdaten der einzelnen Trainingssprecher gebildet werden, wobei die Modelle (SD) eines Modell-Sets jeweils durch mehrere Modellparameter beschrieben werden. Für jeden Sprecher wird dann ein kombinierten Modells in einem hochdimensionalen Modellraum durch Verkettung der Modellparameter der Modelle der einzelnen Trainingssprecher zu jeweils einem zusammenhängenden Supervektor abgebildet. Anschließend wird eine Transformation unter Reduzierung der Dimension des Modellraums zur Gewinnung von Eigenraum-Basisvektoren ($\underline{E}_e$) durchgeführt, welche ein auf der Variabilität der zu transformierenden Vektoren basierendes Reduktionskriterium nutzt. Dabei wird der hochdimensionale Modellraum zunächst in einem ersten Schritt durch einen Basiswechsel auf einen Sprecher-Unterraum reduziert, in dem alle Trainingssprecher repräsentiert sind. In einem zweiten Schritt wird dann innerhalb dieses Sprecher-Unterraums auf den die Trainingssprecher repräsentierenden Vektoren die Transformation zur Gewinnung der Eigenraum-Basisvektoren ($\underline{E}_e$) durchgeführt.

FIG. 1

**Beschreibung**

Die Erfindung betrifft ein Verfahren zur Ermittlung eines Eigenraums zur Darstellung einer Mehrzahl von Trainingssprechern. Bei einem solchen Verfahren wird zunächst ein sprecherabhängiges Modell-Set für die einzelnen Trainingssprecher unter Verwendung von Trainingssprachdaten der einzelnen Trainingssprecher entwickelt, wobei die Modelle eines Modell-Sets jeweils durch mehrere Modellparameter beschrieben werden. Es wird dann in einem hochdimensionalen Vektorraum ein kombiniertes Modell für jeden Sprecher abgebildet, indem eine Mehrzahl der Modellparameter der Modell-Sets der einzelnen Trainingssprecher zu jeweils einem zusammenhängenden Supervektor verkettet wird. Anschließend wird zur Gewinnung von Basisvektoren für den Eigenraum eine Transformation durchgeführt, welche ein auf der Variabilität der zu transformierenden Vektoren basierendes Reduktionskriterium nutzt. Darüber hinaus betrifft die Erfindung ein Verfahren zur Spracherkennung, bei dem ein Ausgangs-Modell-Set an einen aktuellen Sprecher unter Verwendung des erfindungsgemäß erzeugten Eigenraums angepasst wird.

Spracherkennungssysteme arbeiten in der Regel in der Weise, dass zunächst das Sprachsignal in einer Merkmalsanalyseeinheit spektral oder zeitlich analysiert wird. In dieser Merkmalsanalyseeinheit werden die Sprachsignale üblicherweise in Abschnitte, sogenannte "Fenster" (Frames), aufgeteilt. Diese Fenster werden dann für die weitere Analyse in geeigneter Form codiert und digitalisiert. Ein beobachtetes Signal kann dabei durch mehrere verschiedene Merkmale bzw. in einem mehrdimensionalen Merkmalsraum durch einen "Beobachtungsvektor" oder "Merkmalsvektor" beschrieben werden. Die eigentliche Spracherkennung, d.h. die Erkennung des Bedeutungsinhalts des Sprachsignals, erfolgt schließlich dadurch, dass die durch die Beobachtungsvektoren beschriebenen Abschnitte des Sprachsignals bzw. eine ganze Sequenz von Beobachtungsvektoren mit Modellen von verschiedenen, sinnvoll möglichen Sequenzen von Beobachtungen verglichen werden und somit ein Modell herausgesucht wird, welches am besten zu dem aufgetretenen Beobachtungsvektor bzw. der Sequenz passt. Das Spracherkennungssystem muss hierzu eine Art Bibliothek von allen möglichen Signalfolgen aufweisen, aus denen das Spracherkennungssystem dann die jeweils passende Signalfolge auswählen kann. D.h. das Spracherkennungssystem verfügt über ein Set von akustischen Modellen für verschiedene akustische Einheiten, die im Prinzip sinnvollerweise bei einem Sprachsignal vorkommen könnten. Bei den akustischen Einheiten kann es sich beispielsweise um Phoneme oder phonemartige Einheiten wie Diphone oder Triphone handeln, bei denen jeweils das Modell des Phonems vom vorhergehenden und/oder nachfolgenden Phonem innerhalb eines Kontexts abhängt. Selbstverständlich kann es sich bei den akustischen Einheiten auch um ganze Wörter handeln. Dementsprechend kann ein solches Modell-Set nur aus Modellen von Phonemen, von Diphonen, Triphonen oder Ähnlichem, von Wörtern oder einer Mischung von verschiedenen akustischen Einheiten bestehen.

Eine häufig verwendete Methode, akustische Einheiten, d.h. bestimmte Folgen von Beobachtungsvektoren, zu beschreiben, ist die Verwendung sogenannter "Hidden-Markow-Modelle" (HM-Modelle). Es handelt sich hierbei um stochastische Signalmodelle, bei denen davon ausgegangen wird, dass einer Signalfolge eine sogenannte "Markow-Kette" von verschiedenen Zuständen zugrunde liegt, wobei zwischen den einzelnen Zuständen bestimmte Übergangswahrscheinlichkeiten bestehen. Die jeweiligen Zustände selbst sind dabei nicht erkennbar ("Hidden"), und das Auftreten der tatsächlichen Beobachtungen in den einzelnen Zuständen wird durch eine Wahrscheinlichkeitsdichte in Abhängigkeit vom jeweiligen Zustand beschrieben. Ein Modell für eine bestimmte Sequenz von Beobachtungen kann daher in diesem Konzept im Wesentlichen durch die Folge der verschiedenen durchlaufenen Zustände, durch die Dauer des Aufenthalts in den jeweiligen Zuständen, die Übergangswahrscheinlichkeit zwischen den Zuständen sowie die Wahrscheinlichkeit des Auftretens der unterschiedlichen Beobachtungen in den jeweiligen Zuständen beschrieben werden. Ein Modell für ein bestimmtes Phonem wird dabei so erzeugt, dass zunächst geeignete Anfangsparameter für ein Modell verwendet werden und dann in einem sogenannten "Training" dieses Modell durch Veränderung der Parameter so an das zu modellierende Phonem der jeweiligen Sprache angepasst wird, bis ein optimales Modell gefunden ist. Die Details über die verschiedenen HM-Modelle sowie die einzelnen anzupassenden genauen Parameter spielen für die vorliegende Erfindung keine wesentliche Rolle und werden daher nur insoweit später noch weiter beschrieben, als sie für das Verständnis der Erfindung notwendig sind.

Modelle können entweder sprecherabhängig (sogenannte SD-Modelle, Speaker Dependent) oder sprecherunabhängig (sogenannte SI-Modelle, Speaker Independent) sein. Sprecherabhängige Modelle sind genau auf einen individuellen Sprecher trainiert, indem dem Spracherkennungssystem zuvor eine große Anzahl von Wortbeispielen des individuellen Sprechers gegeben wird, wobei der Inhalt dieser Wortbeispiele dem System bekannt ist. Diese Beispiele werden Trainingsdaten genannt. Derartige sprecherabhängige Systeme bzw. Modelle sind relativ exakt für das jeweilige Individuum, für das sie trainiert worden sind. Sie sind aber äußerst unexakt für jede andere Person. Bei einem sprecherunabhängigen System erfolgt dagegen das Training der Modelle anhand von Trainingsdaten von möglichst vielen verschiedenen Sprechern, um so Modelle zu erzeugen, mit denen das System in der Lage ist, jede Person, die die jeweilige Sprache spricht, zu verstehen. Die Fehlerrate in einem solchen sprecherunabhängigen System ist jedoch bei der Erkennung von Sprachdaten eines Sprechers, der nicht zu den Trainingssprechern gehört, etwa 20 bis 25 Prozent höher als die Fehlerrate bei einem vergleichbaren sprecherabhängigen System, das speziell für diesen Sprecher trainiert wurde.

In vielen Anwendungen von Spracherkennungssystemen, beispielsweise bei einer Verwendung in automatischen Telefon-Beantwortungssystemen, besteht leider nicht die Möglichkeit, das System bzw. die Modelle zuvor auf einen bestimmten Sprecher zu trainieren. Um die Performance solcher Systeme zu verbessern, beinhalten viele Spracherkennungssystem inzwischen die Möglichkeit, das System während der Spracherkennung an den Sprecher anhand der bereits beobachteten Sprachdaten anzupassen. Eine einfache Möglichkeit hierzu besteht darin, die vom aktuellen Sprecher stammenden, zu erkennenden Beobachtungen so zu transformieren, dass sie näher an den Beobachtungen eines Referenzsprechers liegen, für den ein sprecherabhängiges Modell trainiert wurde. Eine weitere Möglichkeit besteht darin, die Trainingssprecher entsprechend ihrer Ähnlichkeit zueinander zu gruppieren und für jede Gruppe von ähnlichen Sprechern ein gemeinsames Modell zu trainieren. Es wird dann für den jeweiligen aktuellen Sprecher das Modell der Gruppe gewählt, in die der Sprecher am besten hineinpasst. Eine weitere, besonders gute und effektive Methode ist die Anpassung eines Ausgangs-HM-Modells an den jeweiligen Sprecher, d.h. es werden verschiedene HM-Parameter so verändert, dass das veränderte Modell besser zu dem jeweiligen Sprecher passt. Bei dieser Methode wird während der Spracherkennung ein sprecherabhängiges Modell gebildet. Die beiden bekanntesten Modelladaptionstechniken sind die sogenannte Maximum-A-Posteriori-Abschätzung (MAP) und das Maximum-Likelihood-Linear-Regression-Verfahren (MLLR). Diese sehr effektiven Techniken haben jedoch den Nachteil, dass sie sowohl erhebliche Rechenleistung als auch Zeit und eine ausreichende Menge von Sprachsignalen des neuen Sprechers benötigen, bis das Modell in geeigneter Form an den neuen Sprecher angepasst ist.

In der EP 0 984 429 A2 wird daher ein neuartiges Verfahren zur Anpassung eines Spracherkennungssystems an einen zu erkennenden Sprecher vorgeschlagen, welches mit der dort so genannten Eigenvoice -Technik arbeitet. Startpunkt dieser Eigenvoice-Methode ist die Darstellung von Sprechern und ihrer kombinierten akustischen Modelle als Elemente eines hochdimensionalen linearen Raums, im Folgenden Modellraum genannt, indem alle Parameter, die einen Sprecher beschreiben, zu einem "Supervektor" verkettet werden. Auf diesen Supervektoren der Trainingssprecher wird dann eine lineare Transformation durchgeführt, durch die Eigenraum-Basisvektoren für den sogenannten Eigenraum gewonnen werden. Bei diesem Eigenraum handelt es sich um einen linearen Unterraum des hochdimensionalen Modellraums. Die Transformation wird dabei in der Weise durchgeführt, dass die Eigenraum-Basisvektoren verschiedene Korrelations- oder Diskriminierungsmerkmale zwischen den verschiedenen Trainingssprechern bzw. den Modellen der Trainingssprecher repräsentieren. Eine dort genannte Möglichkeit der Transformation ist beispielsweise die "Principal Component Analysis" (PCA), bei der mittels der Supervektoren der verschiedenen Sprecher eine Korrelationsmatrix gebildet wird und als Eigenraum-Basisvektoren die Eigenvektoren dieser Korrelationsmatrix ermittelt werden. Weitere mögliche Methoden sind die "Linear Discriminant Analysis" (LDA), die "Factor Analysis" (FA), die "Independent Component Analysis" (ICA) oder die "Singular Value Decomposition" (SVD). Alle diese Transformationen sind jedoch relativ rechenintensiv. Jeder der so geschaffenen Eigenraum-Basisvektoren repräsentiert eine unterschiedliche Dimension, in der einzelne Sprecher voneinander unterschieden werden können. Außerdem kann jeder Supervektor jedes Sprechers aus dem ursprünglichen Trainingsmaterial durch eine Linearkombination dieser Basisvektoren beschrieben werden.

Ein Problem der Eigenvoice-Methode besteht jedoch in der Umsetzung dieses Verfahrens zur Verwendung in der Erkennung von kontinuierlicher Sprache mit großem Vokabular. Bei einer solchen Spracherkennung bestehen erheblich mehr Möglichkeiten von aufeinanderfolgenden Phonemen, und es liegt häufiger ein Verschleiß von Silben etc. vor als bei einer Eingabe von einzelnen festgelegten Befehlen. Die reale Verteilung der Beobachtungen ist daher zu diffus, und es gibt zu viele Variationen. Bei der Verwendung von HM-Modellen kann daher beispielsweise eine akustische Einheit nicht mehr durch einen einfachen Zustand oder durch mehrere einzelne Zustände beschrieben werden, welche jeweils nur durch eine einzige Wahrscheinlichkeitsdichte, beispielsweise eine einfache Gauß- oder Laplace-Dichte, beschrieben werden. Stattdessen ist eine Mischung von verschiedenen Dichten nötig, d.h. es müssen mehrere solcher Dichten mit unterschiedlichen Wichtungen überlagert werden, um eine der realen Verteilung angepasste Wahrscheinlichkeitsdichte zu erreichen.

Geht man von einer Sprache aus, die 42 unterschiedliche Phoneme hat, und wird jedes dieser Phoneme durch nur drei Zustände pro Phonem (Anfangszustand, Mittelzustand, Endzustand) beschrieben, so führt dies bereits zu 142 verschiedenen Zuständen, die beschrieben werden müssen. Bei einer Verwendung von kontextabhängigen Phonemen, was bei einer Erkennung von kontinuierlicher Sprache sehr sinnvoll ist, werden für jedes Phonem verschiedene kontextabhängige Modelle trainiert, je nachdem, welches Phonem unmittelbar davor und/oder danach angrenzt (Triphone). Zur Beschreibung solcher Triphone einer Sprache sind insgesamt beispielsweise 2000 Zustände nötig. Bei der Verwendung einer ausreichenden Anzahl von verschiedenen Wahrscheinlichkeitsdichten pro Zustand (ca. 30) kommt man so zu etwa 60 000 verschiedenen Wahrscheinlichkeitsdichten. Dies führt bei dem üblicherweise verwendeten Merkmalsraum von ca. 30 bis 40 Dimensionen dazu, dass letzten Endes ein einzelner Sprecher durch annähernd zwei Millionen einzelne Modellparameter beschrieben wird. Diese Modellparameter umfassen alle Merkmalsparameter zur Beschreibung der 60 000 Wahrscheinlichkeitsdichten im Merkmalsraum, wobei in der Regel von jeder Dichte nur die Mittelwerte im Merkmalsraum festgelegt werden und die Varianz für alle Dichten gleich und konstant angenommen wird. Selbstverständlich können aber für jede Dichte auch zusätzliche Parameter verwendet werden, die die Kovarianz individuell für diese Dichte festlegen. Außerdem können die Modellparameter u.a. noch die Übergangswahrscheinlichkeiten zwischen den Zuständen und weitere Parameter zur Beschreibung der verschiedenen HM-Modelle umfassen. Die annähernd zwei Millionen Modellparameter müssen dann zu den Supervektoren verkettet werden, was zu einem entsprechend hoch dimensionierten Modellraum führt. Es ist offensichtlich, dass die oben genannten Transformationen zur Berechnung der Eigenraum-Basisvektoren, wie zum Beispiel die Berechnung der Eigenvektoren einer Kovarianzmatrix, in einem nahezu $2x10^6$-dimensionalen Raum äußerst rechenaufwendig sind und hierzu ein enormer Hauptspeicherplatz benötigt wird, um bei den erforderlichen Rechenoperationen die Vektoren und Matrizen zu speichern. Derartige Transformationen lassen sich mit den derzeit vorhandenen Rechnern kaum realisieren, so dass die Eigenvoice-Methode für Spracherkennungssysteme für kontinuierliche Sprache mit großem Vokabular bisher nicht eingesetzt wird.

Es ist Aufgabe der vorliegenden Erfindung, ein Verfahren anzugeben, mit dem auch bei Modellen mit sehr vielen Modellparametern mit relativ geringem Rechenaufwand eine Ermittlung eines Eigenraums möglich ist.

Diese Aufgabe wird durch ein Verfahren gemäß Patentanspruch 1 gelöst.

Erfindungsgemäß wird zur Ermittlung der Basis-Vektoren des Eigenraums der hochdimensionale Modellraum zunächst durch einen einfachen Basiswechsel auf einen Sprecher-Unterraum reduziert, in dem die Supervektoren aller Trainingssprecher angeordnet sind. Ein solcher einfacher Basiswechsel lässt sich auf geeignete Weise auch in hochdimensionalen Räumen auf heutigen Rechnern problemlos durchführen. In dem reduzierten Sprecher-Unterraum kann dann auf den Vektoren, die die Sprechermodelle in diesem Raum repräsentieren, die eigentliche Transformation zur Ermittlung der Eigenraum-Basisvektoren durchgeführt werden. Anschließend erfolgt dann eine einfache Rücktransformation der gefundenen Eigenraum-Basisvektoren in den Modellraum.

Bei einer bevorzugten Ausführungsform werden zur Erzeugung des Sprecher-Unterraums die Differenzvektoren der Supervektoren zu einem gewählten Ursprungsvektor orthonormiert. Als Ursprungsvektor wird dabei vorzugsweise ein mittlerer Supervektor verwendet. Das ist der Supervektor, dessen Parameter jeweils die Mittelwerte der entsprechenden Parameter der einzelnen sprecherabhängigen Supervektoren sind. Um n verschiedene Sprecher in diesem Sprecher-Unterraum zu repräsentieren, muss der Sprecher-Unterraum maximal eine Dimension n-1 aufweisen, d.h. die Dimensionen des Raums, in dem dann die eigentliche Berechnung der Basisvektoren des Eigenraums durchgeführt wird, sind gegenüber dem ursprünglichen Modellraum stark reduziert, wodurch erhebliche Rechenleistung und Speicherplatz eingespart werden.

Eine einfacher Basiswechsel kann beispielsweise durch eine Gram-Schmidt-Orthonormierung der betreffenden Vektoren erreicht werden. Alternativ kann auch eine Löwdin-Transformation oder ein anderes geeignetes Verfahren genutzt werden.

Das Verfahren bietet sich insbesondere zur Entwicklung von Eigenräumen für Sprachsysteme an, die auf Basis der eingangs genannten Hidden-Markow-Modelle arbeiten. Im Prinzip kann ein solches Verfahren aber auch bei anderen Modellen genutzt werden, bei denen es darum geht, eine Vielzahl von Parametern zu Supervektoren zu verketten, um so verschiedene Sprecher als Punkte in einem hochdimensionalen Modellraum darzustellen, und dann in diesem Modellraum diverse Transformationen durchzuführen, um Korrelationen der Sprecher untereinander zu ermitteln.

Bei der Verkettung der Modellparameter zu den Supervektoren muss auf die Anordnung der einzelnen Parameter geachtet werden. Im Prinzip ist die Anordnung der einzelnen Parameter zueinander zwar beliebig, jedoch muss sichergestellt werden, dass eine einmal gewählte Anordnung für alle Sprecher gleich gewählt wird. Insbesondere muss auch die Anordnung der einzelnen Merkmalsparameter, welche die einzelnen Wahrscheinlichkeitsdichten eines bestimmten Zustands beschreiben, für alle Sprecher so gewählt werden, dass die Parameter über alle Sprecher optimal korreliert sind. Nur im Falle der gleichartigen Anordnung aller Parameter innerhalb der Supervektoren der einzelnen Sprecher ist sichergestellt, dass die ermittelten Basisvektoren des Eigenraums die gewünschte Information zur Unterscheidung verschiedener Sprecher richtig repräsentieren. Die richtige Zuordnung ist um so schwieriger, je mehr Modellparameter zur Beschreibung eines einzelnen Modells benötigt werden.

Daher wird bei einem bevorzugten Ausführungsbeispiel des erfindungsgemäßen Verfahrens zunächst in einem ersten Schritt ein gemeinsames sprecherunabhängiges Modell-Set für die Trainingssprecher unter Verwendung der Trainingssprachdaten aller beteiligten Trainingssprecher entwickelt. Die gesamten Trainingssprachdaten werden dabei dann herangezogen, um für die verschiedenen akustischen Einheiten jeweils sprecherunabhängige Modelle zu trainieren. Anschließend werden in einem zweiten Schritt die Trainingssprachdaten der einzelnen Trainingssprecher dazu verwendet, um das gefundene sprecherunabhängige Modell-Set jeweils an die einzelnen Trainingssprecher anzupassen. Diese Anpassung kann beispielsweise mit den üblichen Verfahren wie MAP oder MLLR erfolgen. Bei der Adaption der Modelle des gemeinsamen sprecherunabhängigen Modell-Sets an die Modelle der sprecherabhängigen Modell-Sets der einzelnen Sprecher sind die jeweiligen Bedeutungsinhalte der Sprachdaten bekannt. Es handelt sich um eine sogenannte "überwachte Adaption" ("supervised adaptation"). Bei dieser Adaption kann problemlos erfasst werden, welche Modellparameter der Modelle des sprecherunabhängigen Modell-Sets den einzelnen Modellparametern der entsprechenden Modelle der sprecherabhängigen Modell-Sets zugeordnet werden, so dass auch eine eindeutige Zuordnung der Parameter untereinander festlegbar ist. Die Verkettung der einzelnen Modellparameter der Modell-Sets zu den Supervektoren erfolgt dann derart, dass die Modellparameter der Modelle der sprecherabhängigen Modell-Sets, die denselben Modellparametern desselben Modells des sprecherunabhängigen gemeinsamen Modell-Sets zugeordnet sind, auch an den entsprechenden identischen Positionen der jeweiligen Supervektoren angeordnet werden. Somit ist selbst bei einer außerordentlich hohen Vielzahl verschiedener Modellparameter, eine eindeutige Anordnung der einzelnen Parameter innerhalb der Supervektoren gewährleistet.

Die verschiedenen Basisvektoren des Eigenraums werden vorzugsweise nach ihrer Wichtigkeit für die Unterscheidung verschiedener Sprecher geordnet. Dadurch besteht die Möglichkeit, für die Verwendung im Spracherkennungssystem den Eigenraum noch weiter zu reduzieren, indem die unwichtigsten Basisvektoren des Eigenraums, die nur wenig Informationen enthalten, mit denen Sprecher unterschieden werden können, verworfen werden. Die Dimension des letztlich in einer Spracherkennung genutzten Eigenraums kann dabei erheblich geringer sein als die Anzahl der Trainingssprecher. Es reichen somit wenige Koordinaten aus, um die einzelnen sprecherabhängigen Modelle der Trainingssprecher in dem so geschaffenen a priori-optimierten Eigenraum innerhalb des hochdimensionalen Modellraums zu charakterisieren und eine Adaption an einen neuen Sprecher durchzuführen. Die Anzahl der benötigten Koordinaten beträgt dabei nur einen Bruchteil der Anzahl an Freiheitsgraden von anderen Adaptionsmethoden wie beispielsweise MLLR. Bei Verwendung des PCA-Verfahrens zur Ermittlung der Eigenvektoren der Kovarianzmatrix der Supervektoren als Eigenraum-Basisvektoren kann die Bewertung der Eigenvektoren anhand der zugehörigen Eigenwerte erfolgen. Eigenvektoren mit höheren Eigenwerten sind wichtiger als Eigenvektoren mit niedrigeren Eigenwerten.

Erfindungsgemäß kann ein solcher Eigenraum in einem Verfahren zur Spracherkennung verwendet werden, bei dem zunächst ein Ausgangsmodell-Set anhand bereits beobachteter, zu erkennender Sprachdaten eines aktuellen Sprechers an diesen Sprecher unter Verwendung des Eigenraums angepasst wird.

Hierfür bestehen verschiedene Möglichkeiten. Einige davon werden in der eingangs genannten EP 0 984 429 A2 genannt. Die Anpassung des Ausgangsmodells an den jeweiligen Sprecher erfolgt dabei in der Weise, dass das angepasste Modell schließlich innerhalb des Eigenraums liegt, d.h. sich als Linearkombination der verschiedenen Basisvektoren des Eigenraums darstellen lässt.

Die einfachste Methode ist die direkte Projektion des Ausgangsmodells in den Eigenraum. Eine solche Projektion findet genau den Punkt innerhalb des Eigenraums, der am nächsten zu dem außerhalb des Eigenraums liegenden Ausgangsmodell des neuen Sprechers liegt. Ungünstigerweise ist diese Methode jedoch relativ grob. Darüber hinaus kommt eine solche Projektionsoperation nur dann in Frage, wenn von dem neuen Sprecher genügend Eingangs-Sprachmaterial vorliegt, sodass alle akustischen Einheiten in den Daten zumindest einmal repräsentiert sind. In vielen Anwendungen sind diese Bedingungen nicht erfüllbar.

Als Alternative besteht die Möglichkeit der in dieser Schrift ebenfalls vorgeschlagenen Methode der Maximum-Likelihood-Eigenvoice-Decomposition (MLED). Bei dieser Methode wird ein Punkt innerhalb des Eigenraums gefunden, der genau den Supervektor repräsentiert, der zu einem Hidden-Markow-Modell-Set gehört, welches die größte Wahrscheinlichkeit hat, durch die Sprache des neuen Sprechers erzeugt zu werden. Auf die genaue Technik dieses Verfahrens soll hier nicht weiter eingegangen werden. Es wird hierzu auf die EP 0 984 429 A2 verwiesen.

Bei beiden Verfahren wird auch für solche Sprecher, die Charakteristika aufweisen, welche weit von den verschiedenen Charakteristika der Trainingssprecher abweichen, nur ein Modell-Set innerhalb des Eigenraums erzeugt. Da solche Sprecher aber durch ein Modell-Set im Eigenraum der Trainingssprecher nicht optimal repräsentiert werden, ist es oft sinnvoll, zunächst mit dem erfindungsgemäßen Verfahren ein Modell-Set innerhalb des Eigenraums zu entwickeln und dieses als neues Ausgangs-Modell-Set für eine weitere optimale Anpassung mittels einer MAP- oder MLLR-Methode zu nutzen. Selbstverständlich können aber auch beliebige andere Verfahren verwendet werden, um das Ausgangs-Modell-Set unter Nutzung des Eigenraums an den neuen Sprecher zu adaptieren.

Mit dem erfindungsgemäßen Verfahren ist eine relativ schnelle, einfache Sprecheradaptierung bei der Erkennung eines kontinuierlichen Sprachsignals möglich. Der überwiegende Rechenaufwand muss nur einmal zur Bearbeitung des Trainingssprachmaterials und zur Auffindung des Eigenraums durchgeführt werden, wobei dieser Rechenaufwand selbst bei kontinuierlicher Spracherkennung mit großem Vokabular aufgrund der erfindungsgemäßen Durchführung eines Basiswechsels zur Reduzierung des Parameterraums auf einen Unterraum problemlos beherrschbar ist. Auf diese Weise kann der Eigenraum ohne direkte Nutzung der Millionen von Parametern effizient gebildet werden.

Die Erfindung wird im Folgenden unter Hinweis auf die beigefügten Figuren anhand eines Ausführungsbeispiels näher erläutert. Die nachfolgend dargestellten Merkmale und die bereits oben beschriebenen Merkmale können nicht nur in den genannten Kombinationen, sondern auch einzeln oder in anderen Kombinationen erfindungswesentlich sein.

Es stellen dar:

Figur 1 eine schematische Darstellung des Ablaufs der verschiedenen Schritte des erfindungsgemäßen Verfahrens zur Erzeugung eines Eigenraums

Figur 2 eine Veranschaulichung der Anpassung eines sprecherunabhängigen Modells an zwei verschiedene Sprecher.

Bei dem hier erläuterten Ausführungsbeispiel beginnt das erfindungsgemäße Verfahren zunächst damit, dass das gesamte Sprachdatenmaterial der Trainingssprecher, bei dem konkreten Ausführungsbeispiel von 300 verschiedenen Sprechern, dazu verwendet wird, um ein gemeinsames sprecherunabhängiges Modell-Set mit verschiedenen sprecherunabhängigen Modellen SI für die verschiedenen akustischen Einheiten zu trainieren.

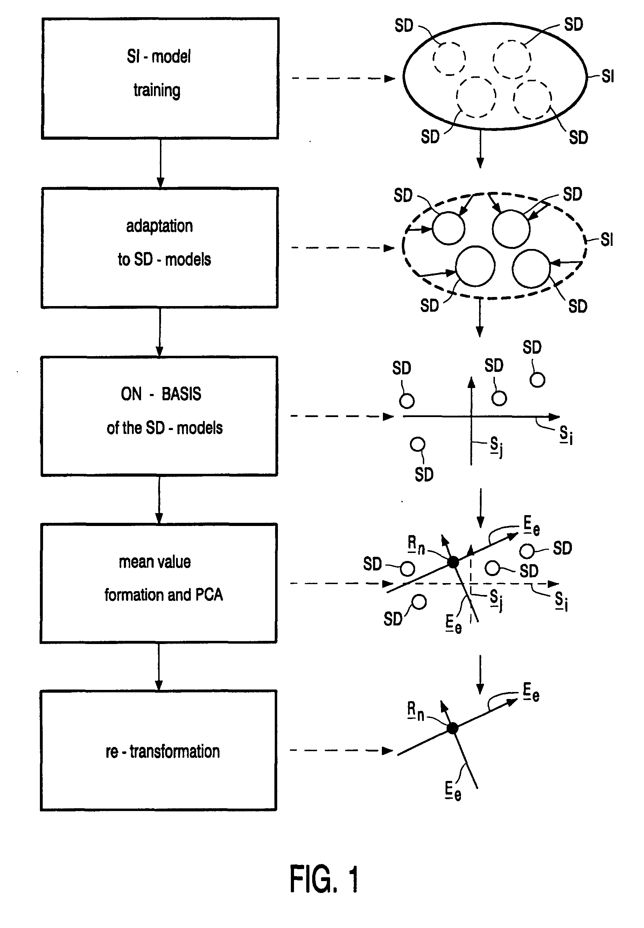

Eine solches sprecherunabhängiges Modell SI für eine akustische Einheit ist in Figur 1 im ersten Schritt als durchgezogene, ellipsenförmige Verteilung dargestellt. In der Realität handelt es sich hierbei um ein Modell, das aus drei Zuständen besteht, welche durch mehrere Wahrscheinlichkeitsdichten beschrieben werden. Diese Dichten werden wiederum durch 33 akustische Merkmalsparameter beschrieben, bei denen es sich jeweils um die Mittelwerte der Wahrscheinlichkeitsdichten im Merkmalsraum handelt. Im folgenden Ausführungsbeispiel werden als Merkmale 16 mel-cepstrale Koeffizienten und deren 16 erste zeitliche Ableitungen verwendet. Als 33. Merkmal kommt die zweite Ableitung der Energie, d.h. des 0. mel-cepstralen Koeffizienten, hinzu. Selbstverständlich kann ein solches Modell auch durch weniger Parameter oder durch noch weitere zusätzliche Parameter, beispielsweise die Varianzen der Dichteverteilungen, beschrieben werden.

In einem zweiten Schritt werden diese sprecherunabhängigen Modelle SI jeweils unter Verwendung des Trainingsmaterials der einzelnen Trainingssprecher an die einzelnen Sprecher angepasst, d.h. es werden sprecherabhängige Modelle SD erzeugt. Bei dem in Figur 1 dargestellten Ausführungsbeispiel wird das sprecherunabhängige Modell SI an vier verschiedene Sprecher angepasst.

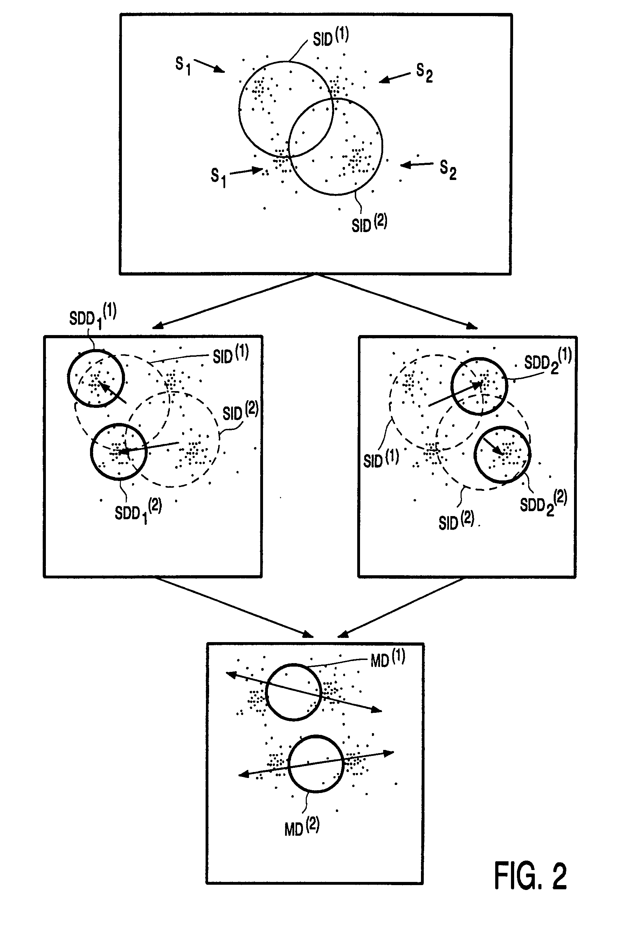

In Figur 2 wird das Verfahren anhand eines Beispiels mit nur zwei Trainingssprechern $S_1$, $S_2$ noch einmal genauer veranschaulicht. Die einzelnen Punkte entsprechen jeweils einzelnen aufgetretenen Beobachtungen zu einer ganz bestimmten akustischen Einheit, die von den beiden Trainingssprechern $S_1$, $S_2$ gesprochen wurde. Es handelt sich um eine Darstellung in einem Merkmalsraum, der hier zur Veranschaulichung nur zwei Dimensionen aufweist. Üblicherweise wird jedoch eine einzelne Beobachtung nicht durch zwei, sondern eine Vielzahl - im vorliegenden Ausführungsbeispiel wie gesagt 33 -unterschiedliche Merkmalsparameter beschrieben. Der Merkmalsraum ist daher im vorliegenden tatsächlichen Ausführungsbeispiel nicht zweidimensional wie in Figur 2, sondern 33-dimensional.

Wie zu sehen ist, sind die einzelnen Beobachtungen der bestimmten akustischen Einheit für beide Sprecher $S_1$, $S_2$ über weite Bereiche örtlich verteilt, wobei sich im gezeigten Fall für beide Sprecher $S_1$, $S_2$ deutlich jeweils zwei lokale Maxima herausgebildet haben. In einem Modell ist diese akustische Einheit daher mit einer einzigen gaußschen Wahrscheinlichkeitsdichte nicht ausreichend gut modellierbar, sondern es muß eine Überlagerung von mindestens zwei Wahrscheinlichkeitsdichten verwendet werden, um die zwei Maxima in der realen örtlichen Verteilung der Beobachtungen wiederzugeben. In der Realität ist die Verteilung der Beobachtungen üblicherweise noch diffuser, sodass für eine gute Modellierung um die 30 Wahrscheinlichkeitsdichten überlagert werden.

Um nun festzulegen, welche Dichte eines Modells für eine bestimmte akustische Einheit eines bestimmten Sprechers mit welcher Dichte des entsprechenden Modells für die gleiche akustische Einheit eines anderen Sprechers korrespondiert, wird zunächst aus allen Trainingssprachdaten ein gemeinsames sprecherunabhängiges Modell trainiert. In Figur 2 weist dieses Modell genau zwei sprecherunabhängige gaußsche Wahrscheinlichkeitsdichten $SID^{(1)}$, $SID^{(2)}$ auf. Dieses sprecherunabhängige Modell wird dann in einem nächsten Schritt jeweils an die beiden einzelnen Sprecher $S_1$, $S_2$ adaptiert, wobei das bekannte Trainingssprachmaterial der beiden einzelnen Sprecher $S_1$, $S_2$ verwendet werden kann. Dies führt zu einem sprecherabhängigen Modell mit zwei Wahrscheinlichkeitsdichten $SDD^{(1)}_1$, $SDD^{(2)}_1$ für den ersten Sprecher $S_1$ und zu einem weiteren sprecherabhängigen Modell mit zwei Wahrscheinlichkeitsdichten $SDD^{(1)}_2$, $SDD^{(2)}_2$ für den zweiten Sprecher $S_2$. Da die Modelle jeweils aus dem gleichen sprecherunabhängigen "Start-"Modell entwickelt wurden, ist die Zuordnung der Wahrscheinlichkeitsdichten klar, es korrespondieren jeweils die Wahrscheinlichkeitsdichten $SDD^{(1)}_1$, $SDD^{(2)}_1$, $SDD^{(1)}_2$, $SDD^{(2)}_2$ der beiden Sprecher $S_1$, $S_2$, die aus derselben Wahrscheinlichkeitsdichte $SID^{(1)}$, $SID^{(2)}$ des sprecherunabhängigen Modells entwickelt wurden. In dem in Figur 2 dargestellten vereinfachten Fall ist diese richtige Zuordnung auch durch die Lage der lokalen Maxima der Verteilungen der einzelnen Beobachtungen der Sprecher $S_1$, $S_2$ mit dem bloßen Auge zu ersehen. Das Problem wird aber deutlich, wenn man bedenkt, dass bei einer realen Auswertung von Trainingssprachdaten nicht zwei Verteilungen in einem zweidimensionalen Raum, sondern ca. 30 Verteilungen in einem 33-dimensionalen Raum einander zuzuordnen sind, wobei die einzelnen Verteilungen eines Zustands eines Modells eng übereinanderliegen.

Durch das erfindungsgemäße Zuordnungsverfahren wird erreicht, dass eine klare Parameterzuordnung jeder einzelnen Dichte, jedes einzelnen Zustands und jedes einzelnen Modells für jeden der Sprecher existiert. Anhand dieser bekannten Ordnung können dann sämtliche Parameter für alle Sprecher jeweils in einen Supervektor pro Sprecher hintereinander verkettet werden, wobei sichergestellt wird, dass in allen Supervektoren für alle Sprecher die gleiche Anordnung der Parameter vorliegt. Mit Hilfe dieser Supervektoren lässt sich dann jeder einzelne Sprecher genau als ein Punkt in dem hochdimensionalen Modellraum, im vorliegenden Ausführungsbeispiel ein etwa $2 \times 10^6$-dimensionaler Raum, darstellen. Dieser Modellraum enthält alle Informationen der Sprechervariationen im Training.

Um die Informationen für eine spätere Spracherkennung effektiv nutzen zu können, ist eine Reduzierung der Datenmenge, insbesondere eine Reduzierung der Dimensionen des Modellraums, notwendig, ohne dass hierbei wesentliche Informationen verloren gehen. Hierzu wird die "Eigenvoice"-Methode verwendet, bei der auf den Supervektoren der einzelnen Sprecher eine Transformation durchgeführt wird, um die Basisvektoren eines Eigenraums zu finden. Bei dieser Transformation werden Reduktionskriterien angewendet, die auf der Variabilität, beispielsweise der Varianz, der zu transformierenden Vektoren untereinander basieren. Eine Möglichkeit der Transformation ist - wie eingangs genannt - die "Principal Component Analysis" (PCA). Ebenso können aber selbstverständlich auch hier andere geeignete Methoden wie die "Linear Discriminant Analysis" (LDA), die "Factor Analysis" (FA), die "Independent Component Analysis" (ICA) oder die "Singular Value Decomposition" (SVD) verwendet werden.

Im folgenden Ausführungsbeispiel wird davon ausgegangen, dass zum Auffinden der Eigenraum-Basisvektoren eine PCA-Transformation durchgeführt wird, d.h. es werden die Eigenvektoren einer mittels der Supervektoren der einzelnen Sprecher ermittelten Kovarianzmatrix und die zugehörigen Eigenwerte gesucht. Diese Eigenvektoren bilden dann die Eigenraum-Basisvektoren.

In der folgenden detaillierteren mathematischen Beschreibung dieses Verfahrens werden folgende Notationen verwendet:

$n_p$ ist die Anzahl der anzupassenden Modellparameter; bei dem vorliegenden Ausführungsbeispiel die Dimension des Merkmalsraums (d.h. die Anzahl der akustischen Merkmalsparameter), multipliziert mit der totalen Anzahl der Wahrscheinlichkeitsdichten

$n_s$ ist die Anzahl der Trainingssprecher, durch die die Trainingssprachdaten erzeugt wurden; $n_s \ll n_p$

$P$ ist der Modellraum, d.h. der Raum aller Modellparameter $n_p$, bei dem vorliegenden Ausführungsbeispiel sind dies alle Mittelwerte aller Wahrscheinlichkeitsdichten im Merkmalsraum. ( Hierbei werden lineare Strukturen verwendet. Dies muss bei der Darstellung von anzupassenden Parametern berücksichtigt werden. Wenn z.B. Varianzen $\sigma$ angepasst werden, so bietet sich log ($\sigma$) als gute Koordinate an, um Transformationen zu sehr kleinen oder sogar negativen Werten von $\sigma$ zu vermeiden). $P$ hat die Struktur eines affinen euklidischen Raums, das bedeutet, dass Vektoren eines $n_p$-dimensionalen Vektorraums verwendet werden können, um Translationen in $P$ auf einem natürlichen Weg zu definieren. Die Elemente von $P$ werden im Folgenden einfach unterstrichen. Lineare Abbildungen in diesem Raum sind zweifach unterstrichen.

$\underline{R}_i$ ist ein Element von $P$ ( z.B. ein Satz von Modellparametern eines möglichen Sprechers), d.h. ein Supervektor eines Sprechers; $i$ = 1 bis $n_s$.

Anstelle der Kovarianzmatrix der Supervektoren selbst wird im Folgenden die Kovarianzmatrix der Differenzvektoren $\underline{D}_i$ der Supervektoren zu einem "mittleren Supervektor" $\underline{R}_M$ aller Sprecher bestimmt.

Ausgangspunkt ist hierfür die Bestimmung des Mittelwerts $\underline{R}_M$ für die Supervektoren aller $\underline{R}_i$ aller Sprecher:

$$\underline{R}_M = \frac{1}{n_s} \sum_i \underline{R}_i \qquad\qquad (1)$$

Dieser mittlere Supervektor $\underline{R}_M$ ist, wie Formel (1) zeigt, ein komponentenweise gemittelter Supervektor aller Sprecher und repräsentiert somit ein mittleres Modell-Set der einzelnen sprecherabhängigen Modell-Sets der Trainingssprecher.

Anschließend werden die Abweichungen, d.h. die Differenzvektoren $\underline{D}_i$, der einzelnen Supervektoren $\underline{R}_i$ zu diesem mittleren Supervektor $\underline{R}_M$ bestimmt:

$$\underline{D}_i = \underline{R}_i - \underline{R}_M \qquad\qquad (2)$$

Alle weiteren Berechnungen finden nun mit diesen Differenzvektoren $\underline{D}_i$ statt.

In Figur 2 ist im untersten dargestellten Verfahrensschritt für die beiden jeweils zusammengehörigen sprecherabhängigen Dichten $SDD^{(1)}_1$, $SDD^{(1)}_2$ und $SDD^{(2)}_1$, $SDD^{(2)}_2$ eine mittlere Dichte $MD^{(1)}$, $MD^{(2)}$ dargestellt. Es handelt sich hierbei um Dichten $MD^{(1)}$, $MD^{(2)}$, die die gleiche Varianz aufweisen, wie die sprecherabhängigen Dichten $SDD^{(1)}_1$, $SDD^{(1)}_2$, $SDD^{(2)}_1$, $SDD^{(2)}_2$. Der Mittelwert dieser mittleren Dichten $MD^{(1)}$, $MD^{(2)}$ liegt jeweils im Mittelwert der Mittelwerte der jeweiligen einzelnen Dichten SDD$^{(1)}_1$, SDD$^{(1)}_2$ und SDD$^{(2)}_1$, SDD$^{(2)}_2$ der beiden Sprecher S$_1$, S$_2$.

Die Kovarianzmatrix $\underline{K}$ der Differenzvektoren $\underline{D}_j$ erhält man durch Multiplikation der Vektoren $\underline{D}_j$ als Zeilen in einer $n_S \times n_P$ -Matrix $\underline{\underline{D}}$ mit ihrer Transformierten $\underline{\underline{D}}^{tr}$:

$$\underline{\underline{K}} = \underline{\underline{D}}^{tr}\,\underline{\underline{D}} \tag{3}$$

Die i.a. $n_s$ Eigenvektoren $\underline{E}_1,...\underline{E}_{n_s}$ dieser Kovarianzmatrix $\underline{K}$ mit Eigenwert größer Null sind die an sich gesuchten Basisvektoren des Eigenraums. Bei diesen PCA-Eigenvektoren $\underline{E}_1,...\underline{E}_{n_s}$ handelt es sich um die Hauptachsen der Kovarianzmatrix $\underline{K}$ oder den "Trägheits-Tensor". Die Eigenvektoren entsprechen jeweils den Achsen, entlang derer sich die einzelnen Sprecher voneinander unterscheiden. Da die Kovarianzmatrix $\underline{K}$ aus den Differenzvektoren $\underline{D}_j$ der Supervektoren $\underline{R}_j$ zu dem mittleren Supervektor $\underline{R}_M$ gebildet wurde, verlaufen die Eigenvektoren $\underline{E}_1,... \underline{E}_{n_s}$ jeweils durch den mittleren Supervektor $\underline{R}_M$, der den Ursprung des Eigenraums bildet.

Für zwei Dimensionen sind die Richtungen der Eigenvektoren in dem unteren Teil von Figur 2 anschaulich dargestellt. Sie laufen jeweils durch den Mittelpunkt der aus den beiden sprecherabhängigen Dichten SDD$^{(1)}_1$, SDD$^{(1)}_2$ und SDD$^{(2)}_1$, SDD$^{(2)}_2$ gebildeten mittleren Dichten MD$^{(1)}$, MD$^{(2)}$ entlang der Verbindungsrichtung der beiden jeweils zu einer mittleren Dichte MD$^{(1)}$, MD$^{(2)}$ gehörigen sprecherabhängigen Dichten SDD$^{(1)}_1$, SDD$^{(1)}_2$ und SDD$^{(2)}_1$, SDD$^{(2)}_2$.

Da derartige Transformationen wie die Berechnung der Eigenvektoren einer Kovarianzmatrix in einem nahezu $2 \times 10^6$-dimensionalen Raum äußerst rechenaufwendig sind und hierzu ein enormer Hauptspeicherplatz benötigt wird, lassen sich diese Transformationen mit den derzeit vorhandenen Rechnern kaum realisieren. Daher wird erfindungsgemäß zunächst ein weiterer Schritt durchgeführt, um den Raum vor der eigentlichen Berechnung der Eigenraum-Basisvektoren zu reduzieren.

Hierzu wird eine Orthonormal-Basis gesucht, die einen Unterraum (im Folgenden auch Sprecher-Unterraum genannt) innerhalb des Modellraums aufspannt, in der sämtliche zu den einzelnen Sprechern bzw. deren Modellen gehörige Differenzvektoren $\underline{D}_j$ repräsentiert sind. Um diese Orthonormal-Basis zu finden, wird eine einfache Basistransformation durchgeführt, die relativ wenig Rechenaufwand fordert. Im folgenden Ausführungsbeispiel wird hierbei das Gram-Schmidtsche Orthonormierungsverfahren gewählt. Selbstverständlich kann auch ein anderes einfaches Transformationsverfahren für einen Basiswechsel, beispielsweise eine Löwdin-Transformation, verwendet werden.

Bei der Durchführung des Gram-Schmidtschen Orthonormierungsverfahrens wird zunächst einer der Differenzvektoren, beispielsweise $\underline{D}_1$ als erster Schmidt-Basisvektor $\underline{S}_1$ der gesuchten Orthonormal-Basis genutzt und lediglich normiert. Anschließend wird ein zweiter Differenzvektor $\underline{D}_2$ zu diesem ersten Schmidt-Basisvektor $\underline{S}_1$ orthonormiert, indem dieser zweite Differenzvektor $\underline{D}_2$ zunächst auf den ersten gefundenen Schmidt-Basisvektor $\underline{S}_1$ projiziert wird, und die zu dem ersten Schmidt-Basisvektor $\underline{S}_1$ parallele Komponente des zweiten Differenzvektors $\underline{D}_2$ vom zweiten Differenzvektor $\underline{D}_2$ abgezogen wird. Die verbleibende, zum ersten Schmidt-Basisvektor $\underline{S}_1$ senkrechte Komponente des zweiten Differenzvektors $\underline{D}_2$ wird dann normiert und bildet so den zweiten Schmidt-Basisvektor $\underline{S}_2$. Entsprechend wird mit den weiteren Differenzvektoren $\underline{D}_3$ bis $\underline{D}_s$ verfahren, wobei jeweils zunächst alle Komponenten parallel zu den bereits bestehenden Schmidt-Basisvektoren $\underline{S}_j$ abgezogen werden und die dazu senkrechte Komponente als neuer Schmidt-Basisvektor $\underline{S}_3$ bis $\underline{S}_s$ normiert wird.

Da auch eine solche Orthonormierung von 300 Vektoren in einem etwa $2 \times 10^6$-dimensionalen Raum aufgrund des begrenzten Speicherplatzes in normalen Rechnern nicht ohne weiteres durchführbar ist, wird bei dem konkreten Ausführungsbeispiel diese Orthonormierung blockweise durchgeführt. Dabei wird davon ausgegangen, dass der Hauptspeicher des Rechners in der Lage ist, gleichzeitig $2n$-Supervektoren abzuspeichern. Es wird dann wie folgt vorgegangen:

Zunächst werden die ersten $2n$-Vektoren $\underline{D}_{1...2n}$ orthonormiert und ihre Darstellung in der neuen gefundenen Basis $\underline{S}_{1...2n}$ gespeichert.

Für jeden weiteren Block von $n$ -Vektoren $\underline{D}_j$ werden dann zunächst für jeden Block von $n$ orthonormierten Schmidt-Basisvektoren $\underline{S}_j$, die bereits aufgefunden wurden, die Projektionen der $\underline{D}_j$ auf diese $\underline{S}_j$ subtrahiert. Die Projektions-Koeffizienten $\underline{D}_j$ in der aufgefundenen Orthonormal-Basis werden hierbei zur Repräsentation der $\underline{D}_j$ in der Orthonormal-Basis gespeichert. Anschließend wird der Rest, d.h. die senkrechten Komponenten, untereinander orthonormiert. Die neu aufgefundenen Schmidt-Basisvektoren $\underline{S}_j$ der Orthonormal-Basis und die Repräsentations-Koeffizienten der einzelnen Differenzvektoren $\underline{D}_j$ in dieser Basis werden dabei wiederum gespeichert.

Eine solche Gram-Schmidtsche Orthonormierung benötigt

$$n_p\left(\frac{3}{2}\,n_S\,(n_S - 1) + n_S\right) \approx \frac{3}{2}\,n_S^2\,n_P \tag{4}$$

floating-point-Operationen. Dies sind zum Beispiel bei 300 Sprechern und 1 000 000 Dimensionen nahezu $10^{11}$ einzelne Operationen, die in etwa ein bis zwei Stunden CPU-Zeit durchführbar sind.

Da die Differenzvektoren $\underline{D}_j$ über den mittleren Supervektor $\underline{R}_M$ gemäß den Formeln (1) und (2) zusammenhängen, sind sie linear abhängig. Dementsprechend wird ein Orthonormal-Basisvektor weniger benötigt als Trainingssprecher vorhanden sind. Dies entspricht dem anschaulichen Beispiel, dass sich drei Punkte innerhalb eines dreidimensionalen Raums immer in einer gemeinsamen Fläche darstellen lassen, d.h. es wird auch hier maximal ein zweidimensionaler Unterraum benötigt, um die drei Punkte des dreidimensionalen Raums darzustellen. Die Einsparung einer Dimension (da ein Freiheitsgrad für die - hier ohnehin unwesentliche - Information der Position der Sprecher relativ zum absoluten 0-Punkt des Modellraums eingespart wird) ist ein Grund, warum beim vorliegenden Ausführungsbeispiel die Differenzvektoren $\underline{D}_j$ der Sprecher und nicht die Supervektoren $\underline{R}_i$ selbst zur Bildung des Sprecher-Unterraums und zur Berechnung der Kovarianzmatrix herangezogen werden. Außerdem wäre sonst der Koordinatensprung in den Eigenraum einbezogen, der jedoch zur Sprecheradaptierung keinen sinnvollen Beitrag liefert.

Auf Wunsch kann außerdem der Supervektor des ursprünglich geschaffenen gemeinsamen sprecherunabhängigen Modells für alle Trainingssprecher in dieser neuen Schmidtschen Orthonormal-Basis dargestellt werden. In diesem Fall erhöht sich die Basis natürlich um eine Dimension. Die Dimension des Unterraums entspricht dann der Anzahl der Sprecher, da ja das gemeinsame sprecherunabhängige Modell durch einen eigenen, von den Supervektoren der einzelnen Sprecher unabhängigen Supervektor repräsentiert wird und somit einen zusätzlichen gemischten Sprecher darstellt, welcher eine besonders große Varianz betreffend der einzelnen akustischen Einheiten aufweist.

Anstelle der Matrix $\underline{D}$ der Abstandsvektoren $\underline{D}_j$ im kompletten Modellraum können nun die Darstellungen der Differenzvektoren $\underline{D}_j$ innerhalb der Schmidtschen Orthonormal-Basis des Sprecher-Unterraums in Spalten zu einer Matrix $\underline{\theta}$ kombiniert werden. Diese Matrix $\underline{\theta}$ ist eine $n_s \times n_s$ -Matrix, d.h. sie hat nur noch 300 mal 300 Elemente. Im Gegensatz dazu enthält die Matrix $\underline{D}$ der Differenzvektoren $\underline{D}_j$ im ursprünglichen Modellraum 300 mal ca. 2 000 000 Elemente.

Für die gesuchte *Kovarianzmatrix* $\underline{K}$ der Differenzvektoren $\underline{D}_j$ gilt dann

$$\begin{aligned} \underline{\underline{K}} &= \underline{\underline{D}}^{tr}\,\underline{\underline{D}} \\ &= \underline{\underline{S}}^{tr}\,\underline{\underline{\theta}}^{tr}\,\underline{\underline{\theta}}\,\underline{\underline{S}} \end{aligned} \qquad\qquad (5)$$

wobei $\underline{S}$ eine $n_s \times n_P$ -Matrix der in Zeilen kombinierten Basisvektoren $\underline{S}_j$ der Schmidtschen Orthonormal-Basis ist. Da die Basisvektoren $\underline{S}_j$ orthonormal sind, reicht eine Diagonalisierung von $\underline{\theta}^{tr}\,\underline{\theta}$ und eine anschließende Rücktransformierung mit der Matrix $\underline{S}$ aus, um die PCA-Eigenvektoren $\underline{E}_1,...\underline{E}_{n_s}$ im Modellraum zu finden. Da die Vektoren $\underline{D}_j$ selbst zur Orthonormierung geführt haben, ist die Matrix $\underline{\theta}$ der Darstellungen der Differenzvektoren $\underline{D}_j$ in der Schmidtschen Orthonormal-Basis eine Dreiecksmatrix, was die Diagonalisierung von $\underline{\theta}^{tr}\,\underline{\theta}$ besonders einfach macht.

Das Ergebnis ist dann ein Eigenraum, dessen Dimension der Anzahl der Sprecher -1 entspricht, dessen Ursprung im Mittelpunkt aller ursprünglichen Supervektoren der einzelnen Sprecher liegt und dessen Basisvektoren $\underline{E}_1,...\underline{E}_{ns}$ entlang der Variabilitäten der einzelnen Sprecher verlaufen.

Alternativ ist es natürlich auch möglich, zunächst eine Orthonormal-Basis der Supervektoren selbst durch einen einfachen Basiswechsel, beispielsweise eine Gram-Schmidt-Orthonormierung, zu finden. Diese so gefundene Basis kann dann im Ursprung auf den Mittelwert aller Supervektoren verschoben werden, und anschließend wird erst die PCA-Methode zur Ermittlung der Eigenvektoren durchgeführt. Dieses Verfahren der Bildung einer Schmidtschen Orthonormal-Basis aus den Supervektoren selbst, einer anschließenden Mittelwertbildung in der neuen Basis und einer darauffolgenden Durchführung des PCA-Verfahrens sowie der anschließenden Rücktransformation ist in Figur 1 in den letzten drei Verfahrensschritten dargestellt.

Ebenso kann natürlich auch auf der durch den einfachen Basiswechsel aufgefundenen Orthonormal-Basis der Supervektoren die PCA-Methode durchgeführt werden und anschließend eine Transformation auf einen gewünschten Ursprung durchgeführt werden. Weiterhin kann anstelle des Mittelwerts aller Supervektoren auch der Supervektor des gemeinsamen sprecherunabhängigen Modells aller Trainingssprecher als Ursprung für den Eigenraum verwendet werden.

Der aufgefundene Eigenraum (und die Darstellungen der Sprecher hierin) ist bereits gegenüber dem ursprünglichen Modellraum erheblich reduziert und enthält dennoch alle Informationen über die Sprechervariationen im Training. Er ist aber immer noch zu komplex, um während einer schnellen Erkennung genutzt zu werden. Daher ist es notwendig, die Dimension weiter zu verringern. Dies kann dadurch erreicht werden, dass einfach einige der Eigenvektoren verworfen werden.

Hierzu können in dem PCA-Verfahren nicht nur die Eigenvektoren, sondern auch die zugehörigen Eigenwerte der Kovarianzmatrix $\underline{K}$ ermittelt werden. (Unter "Eigenwerten" werden im Sinne dieser Schrift, anders als in der eingangs genannten EP 0 984 429 A2, nicht die Koeffizienten eines Modells bei der Darstellung als Linearkombination der Eigenvektoren verstanden, sondern der zu dem jeweiligen Eigenvektor $\underline{E}_e$ der Matrix $\underline{K}$ gehörige Eigenwert $e$, für den gilt: $\underline{E}_e \, \underline{K} = e \, \underline{K}$). Diese Eigenwerte können genutzt werden, um eine Rangordnung der Eigenvektoren $\underline{E}_e$ festzulegen. Je höher der Eigenwert, desto wichtiger ist der zugehörige Eigenvektor $\underline{E}_e$ zur Unterscheidung zweier verschiedener Sprecher. Daher ist es möglich, eine bestimmte Anzahl $n_E$ von wichtigsten Eigenvektoren herauszusuchen, welche tatsächlich für die Aufspannung eines Eigenraums für ein Spracherkennungssystem verwendet werden sollen. Im einen bereits durchgeführten Ausführungsbeispiel des Verfahrens sind das lediglich die Eigenvektoren mit den zehn größten Eigenwerten, in einem anderen Beispiel die Eigenvektoren mit den 50 wichtigsten Eigenwerten.

Es versteht sich von selbst, dass dann auch nur diese tatsächlich zur Aufspannung des Eigenraums verwendeten Eigenvektoren, die sogenannten "Eigenvoices" $\underline{E}_e$, in den Modellraum zurücktransformiert werden müssen und nicht sämtliche aufgefundenen Eigenvektoren der Kovarianzmatrix $\underline{K}$. Durch diese Wahl der Basis für den Eigenraum ist sichergestellt, dass bei einer Projektion eines Supervektors $\underline{R}_i$ auf den reduzierten Eigenraum mit nur $n_E$ Dimensionen, verglichen mit dem original Supervektor $\underline{R}_i$, der resultierende mittlere quadratische Fehler minimiert ist .

Der so aufgefundene Eigenraum kann auf verschiedene Weise genutzt werden, um möglichst schnell ein Ausgangsmodell an einen neuen Sprecher in geeigneter Weise anzupassen. Insofern kann dieser Eigenraum auch als kompletter Datensatz, der bereits alle wesentlichen Informationen der Trainingssprachdaten in vorausgewerteter Weise enthält, in verschiedene Spracherkennungssysteme implementiert werden, die auf unterschiedliche Weise die Daten zur Anpassung eines Ausgangsmodells an einen neuen Sprecher nutzen.

**Patentansprüche**

1. Verfahren zur Ermittlung eines Eigenraums zur Darstellung einer Mehrzahl von Trainingssprechern mit folgenden Schritten:

   - Entwicklung von sprecherabhängigen Modell-Sets für die einzelnen Trainingssprecher unter Verwendung von Trainingssprachdaten der einzelnen Trainingssprecher, wobei die Modelle (SD) eines Modell-Sets jeweils durch mehrere Modellparameter beschrieben werden,
   - Abbildung eines kombinierten Modells für jeden Sprecher in einem hochdimensionalen Vektorraum (Modellraum) durch Verkettung einer Mehrzahl der Modellparameter der Modelle der Modell-Sets der einzelnen Trainingssprecher zu jeweils einem zusammenhängenden Supervektor
   - Durchführung einer Transformation zur Gewinnung von Eigenraum-Basisvektoren ($\underline{E}_e$), welche ein auf der Variabilität der zu transformierenden Vektoren basierendes Reduktionskriterium nutzt,

   **dadurch gekennzeichnet, dass**

   - der hochdimensionale Modellraum zunächst in einem Schritt durch einen Basiswechsel auf einen Sprecher-Unterraum reduziert wird, in dem alle Trainingssprecher repräsentiert sind
   - und dann in einem nachfolgenden Schritt innerhalb dieses Sprecher-Unterraums auf den die Trainingssprecher repräsentierenden Vektoren die Transformation zur Gewinnung der Eigenraum-Basisvektoren ($\underline{E}_e$) durchgeführt wird.

2. Verfahren nach Anspruch 1, **dadurch gekennzeichnet, dass** die Basis ($\underline{S}_i$, $\underline{S}_j$) dieses Sprecher-Unterraums von orthogonalisierten Supervektoren der Modell-Sets oder von orthogonalisierten Differenzvektoren der Supervektoren der Modell-Sets zu einem gewählten Ursprung aufgespannt wird.

3. Verfahren nach Anspruch 2,
   **dadurch gekennzeichnet,**
   **dass** der Ursprung der Basis ($\underline{S}_i$, $\underline{S}_j$) des Sprecher-Unterraums so gewählt ist, dass der Mittelwert aller Trainingssprecher im Ursprung liegt.

4. Verfahren nach Anspruch 2 oder 3,
   **dadurch gekennzeichnet,**
   **dass** zur Entwicklung einer orthonormalen Basis ($\underline{S}_i$, $\underline{S}_j$) des Sprecher-Unterraums das Gram-Schmidtsche Orthonormierungsverfahren verwendet wird.

5. Verfahren nach einem der Ansprüche 1 bis 4,
   **dadurch gekennzeichnet,**

**dass** die Supervektoren auf folgende Weise gebildet werden:

- Entwicklung eines gemeinsamen sprecherunabhängigen Modell-Sets für die Trainingssprecher unter Verwendung der Trainingssprachdaten der Trainingssprecher,
- Adaption des sprecherunabhängigen Modell-Sets an die einzelnen Trainingssprecher zur Entwicklung der sprecherabhängigen Modell-Sets unter Verwendung der jeweiligen Trainingssprachdaten der einzelnen Trainingssprecher
- Erfassung der Zuordnung der Modellparameter der Modelle (SI) des sprecherunabhängigen Modell-Sets zu den Modellparametern der Modelle (SD) der sprecherabhängigen Modell-Sets bei der Adaption des sprecherunabhängigen Modell-Sets an die einzelnen Trainingssprecher
- Verkettung der Mehrzahl der Modellparameter der einzelnen Modell-Sets zu den Supervektoren derart, dass die Modellparameter der Modelle (SD) der sprecherabhängigen Modell-Sets, die denselben Modellparametern desselben Modells (SI) des sprecherunabhängigen Modell-Sets zugeordnet sind, an den entsprechenden Positionen der jeweiligen Supervektoren angeordnet werden.

6. Verfahren nach einem der Ansprüche 1 bis 5,
   **dadurch gekennzeichnet,**
   **dass** die Modelle (SI, SD) Hidden-Markow-Modelle sind, wobei jeder Zustand eines einzelnen Modells (SI, SD) jeweils durch eine Mischung mehrerer Wahrscheinlichkeitsdichten beschrieben wird und die Wahrscheinlichkeitsdichten jeweils durch mehrere akustische Merkmale in einem akustischen Merkmalsraum beschrieben werden.

7. Verfahren nach einem der Ansprüche 1 bis 6,
   **dadurch gekennzeichnet,**
   **dass** für die Eigenraum-Basisvektoren ($\underline{E}_e$) zugehörige Ordnungsmerkmale ermittelt werden.

8. Verfahren nach Anspruch 7,
   **dadurch gekennzeichnet,**
   **dass** die Eigenraum-Basisvektoren ($\underline{E}_e$) die Eigenvektoren einer mittels der Supervektoren ermittelten Korrelationsmatrix und die Ordnungsmerkmale die zu den Eigenvektoren gehörigen Eigenwerte sind.

9. Verfahren nach Anspruch 7 oder 8,
   **dadurch gekennzeichnet,**
   **dass** zur Reduzierung der Dimension des Eigenraums eine bestimmte Anzahl von Eigenraum-Basisvektoren ($\underline{E}_e$) unter Berücksichtigung der Ordnungsmerkmale verworfen wird.

10. Verfahren zur Spracherkennung, bei dem ein Ausgangs-Modell-Set anhand bereits beobachteter, zu erkennender Sprachdaten eines aktuellen Sprechers an diesen Sprecher unter Verwendung eines Eigenraums angepasst wird, welcher auf Basis von Trainingssprachdaten einer Mehrzahl von Trainingssprechern nach einem Verfahren gemäß einem der vorstehenden Ansprüche ermittelt wurde.

11. Computerprogramm mit Programmcode-Mitteln, um alle Schritte eines Verfahrens nach einem der vorstehenden Ansprüche auszuführen, wenn das Programm auf einem Computer ausgeführt wird.

12. Computerprogramm mit Programmcode-Mitteln gemäß Anspruch 11, die auf einem computerlesbaren Datenträger abgespeichert sind.

FIG. 1

FIG. 2